# EUROPEAN PATENT APPLICATION

(11) **EP 1 378 433 A1**
(43) Date of publication of application: **07.01.2004**
(21) Application number: 02447126.0
(22) Date of filing: 05.07.2002
(51) Int. Cl.: B62M 3/00, B62K 19/16

(54) **Hollow bicycle crank**

(71) Applicant: Van Raemdonck, Joris, 9160 Lokeren (BE)
(72) Inventor: Van Raemdonck, Joris, 9160 Lokeren (BE)
(74) Representative: Brants, Johan Philippe Emile

(57) **Abstract**

The present invention relates to composite bicycle crank comprising a hollow crank body having a first and second end, formed of a composite material retaining two metal arrangements, i.e. a bottom bracket axle fitting arrangement positioned at the first end of said body and a pedal mounting arrangement positioned at the second end of said body.

The present invention further relates to a method for the manufacture of said bicycle crank comprising the step of:
positioning a bottom bracket axle fitting arrangement and a pedal mounting arrangement in fixed positions in a female mold; and
applying composite material within the mold and around the arrangements and providing at least one inflatable bladder in the mold, wherein said bladder is connected to at least one passage protruding at least one of the arrangements or and/or the composite material,
mating the top half of the female mold on the bottom half of the female mold;
curing the composite material; while
inflating said bladder so as to cause the composite material to generally conform to the shape of the mold.

## Description

### FIELD OF THE INVENTION

The present invention relates to an improved hollow bicycle crank for bicycle pedals made of composite material more specifically of fiber reinforced polymer composites, and to methods of making the same.

### BACKGROUND OF THE INVENTION

The fabrication of bicycle crank utilizing fiber reinforced polymer composites is well known. For example, the use of thermoset composites to fabricate unitary construction bicycle cranks is disclosed in US Pat. No. 6,202,506 and US Pat. No. 6,305,243. US Pat. No. 6,202,506 discloses a bicycle crank with a core comprised of a durofoam substance, a fiber-reinforced plastic coating encasing the core and two bottom bracket axle fitting arrangements foamed into the core accessible through the fiber-reinforced plastic coating. US Pat. No. 6,305,243 discloses a crank including a main body, an axle fastening member fastened with one end of the main body, a pedal fastening member fastened with other end of the main body, and a cover body of a carbon fiber material for embedding the main body, the axle fastening member and the pedal fastening member.

Thus, although the prior art has recognized, to a limited extent, the benefits of providing a lightweight and durable bicycle cranks, the proposed solutions have, to date, been ineffective in providing a satisfactory remedy.

In view of the foregoing, it is a main object of the invention to provide a hollow bicycle crank made of composite material. It another object of the present invention to provide a method for fabricating said composite hollow bicycle crank which is lightweight and durable, wherein the method minimizes the manual operations involved in the practice thereof, and consequently facilitates the manufacture of a bicycle crank at a substantially reduced cost. As such, it is desirable to minimize or eliminate the steps required for providing interconnection of the crank members and for providing a desirable finish, so as to substantially reduce the amount of labor involved in the fabrication process.

### SUMMARY OF THE INVENTION

The present invention specifically addresses and alleviates the above-mentioned deficiencies associated with the prior art. More particularly, the present invention provides a lightweight and durable composite bicycle crank comprising a hollow crank body (1) having a first and second end, formed of a composite material (5) retaining two metal arrangements, i.e. a bottom bracket axle fitting arrangement (2) positioned at the first end of said body and a pedal mounting arrangement (3) positioned at the second end of said body. In a preferred embodiment at least one passage (4) for a pressurized fluid or gas is provided protruding the hollow crank body (1). In another embodiment, at least one passage (4) for a pressurized fluid or gas is provided protruding at least one of the arrangements (2,3).

The hollow crank body (1) may be partitioned in any desired manner, thereby providing improved resistance to the crank when subjected to mechanical stresses especially torsion stresses. It may have two or more compartments, arranged in any desired manner within the body.

The composite material (5) can be made from glass, carbon, ceramics, aromatic, ultra high molecular weight polymeric or metallic fibers. The composite material is preferably a matrix material which is typically a thermosetting or thermoplastic polymer such as epoxy, polyester, polypropylene, polyurethane, polyamides, polyvinylester, etc likely to comprise strands of fiber glass, carbon, ceramics, aromatic fibers, ultra high molecular weight polymeric fibers or metallic fibers. In an embodiment of the present invention, said composite material (5) is a carbon based or a metal based matrix material.

In another embodiment of the present invention, said composite material (5) is a polymer impregnated fiber material. The polymer may comprise either a thermoset polymer or a thermoplastic polymer, as desired. The crank is preferably comprised of composite material (5) made of a thermoplastic impregnated fiber material, or a polymer impregnated carbon fiber material. The primary choices are carbon or carbon composite materials. Aramids (aromatic nylons) may be used in combination with carbon. Aramide filaments are prepared by condensation of a diamine and terephthalic acid, a carboxylic acid that contains a hexagonal benzene ring in its molecules. The close packing of the aromatic polymer chains produced a strong, tough, stiff, high-melting fiber for radial tires, heat- or flame-resistant fabrics, bulletproof clothing, and fiber-reinforced composite materials. Examples are Nomex® and Kevlar ® (both own by Dupont).

The crank preferably comprises fiber reinforced polymer composite comprising a continuous wrapped sheet of fiber material. The fiber material preferably comprises at least one ply of interwoven fiber material impregnated with a curable resin.

In another embodiment of the present invention, said bicycle crank comprise a hollow crank body wherein the external circumference of the arrangements (2,3) is provided with syntactic foam for increasing the adherence with the composite. Syntactic foams suitable for use herein are usually produced by dispersing microscopic rigid, hollow or solid particles in a liquid or semi-liquid thermosetting resin and then hardening the system by curing. The particles are generally spheres or microballoons of carbon, polystyrene, concrete, phenolic resin, urea-formaldehyde resin, glass, or silica, ranging from 20 to 200 micrometers in diameter. The liquid resins used are the usual resins used in molding reinforced articles, e.g., epoxy resin, polyesters, and urea-formaldehyde resins.

The main advantage of the bicycle cranks according to the invention is their strength and ability to compensate the compressive and tensile stresses during use of said bicycle. Furthermore, the crank according to the invention has the advantage of having metal arrangements encased in a composite body thereby forming single device without the need of additional connecting or joining tools.

The present invention relates further to a method for the manufacture of a bicycle crank according to the invention, comprising the steps of:
a) positioning a bottom bracket axle fitting arrangement (2) and a pedal mounting arrangement (3) in fixed positions in a female mold; and
b) applying composite material (5) within the mold and around the arrangements (2) and (3),
c) providing at least one inflatable bladder (8) in the mold, wherein said bladder is connected to at least one passage (4) protruding at least one of the arrangements (2) or (3) and/or the composite material (5),
d) mating the top half of the female mold (7b) on the bottom half of the female mold;
e) curing the composite material (5); while
f) inflating said bladder (8) so as to cause the composite material (5) to generally conform to the shape of the mold.
According to an embodiment of the present method, step (e) comprises heating the bottom half (7a) and the top half (7b) of the female mold. In another embodiment step (b) may be performed after step (c). The present method further comprises the step of g) cooling the top half (7b) and the bottom half (7a) of the female mold subsequent to inflating said bladder (8).

The main step in the invention is that the crank is bladder molded through a passage protruding at least one of the metal arrangements and/ or the composite material.

The female mold is preferably covered with a composite material which is a polymer-impregnated fiber by applying sheet or tape of woven fiber which has been impregnated with polymer. Preferably, at least one singular, continuous section of such impregnated fiber is utilized, so as to enhance the strength of the crank. Further, according to the preferred embodiment of the present invention, a layer of nylon, preferably comprising nylon sheet or tape is wrapped over the polymer impregnated fiber so as to further enhance the surface finish of the crank. The use of such a nylon outer layer provides a smooth and glossy surface finish which is substantially transparent and thus allows the woven fiber material disposed therebelow in the crank to be seen, thus enhancing the aesthetic appeal thereof.

In a preferred embodiment, After the bottom bracket axle fitting arrangement and the pedal mounting arrangement have been positioned into the bottom half of the female mold, syntactic foam is applied on the outer surface of said arrangements thereby enhancing the adherence to the composite material. The composite material is then added to the female mold.

The bladder can then be placed into the bottom half of the female, connected to a passage protruding at least one of the arrangements. The top half of the mold is subsequently mated to bottom half of said mold. Heat is applied thereto, and the bladder is pressurized, causing the composite material to conform to the shape of the cavity so as to define a unitary construction crank. During this conforming process, the composite forms a flush surface with the outer surfaces thereof in a manner which minimizes or eliminates the need for surface finishing of the crank after it has cooled and been removed from the mold. When more than one bladder is placed in the mold, a partitioned hollow body can be obtained.

In another embodiment the bladder is introduced when the mold is closed. The bladder will then be introduced through an opening in the mold and through the composite material. Upon curing the bladder is inserted. Once cured the bladder may remain in the hollow body or be remove therefrom.

Thus, according to the present invention, the substantial manual effort required to finish the bicycle crank is reduced or eliminated. As such, the molding process of the present invention provides a crank which has a desired surface finish, thereby substantially reducing the cost of fabrication.

In the following detailed description, reference is made to the accompanying figures, in which is shown by way of illustration, specific embodiments in which the invention may be practiced.

### BRIEF DESCRIPTION OF THE DRAWINGS

Figure 1 represents a perspective view of a bicycle crank according to a preferred embodiment of the present invention.
Figure 2 represents a cross sectional view of the bicycle crank of figure 1.
Figure 3 represents an exploded view illustrating the female mold and the component of a bicycle crank according to a preferred embodiment of the present invention during the manufacture method.
Figure 4 represents a cross sectional view of a bicycle crank according to another preferred embodiment.
Figure 5 represents a cross sectional view of the bicycle crank according to yet another preferred embodiment.

### DETAILED DESCRIPTION

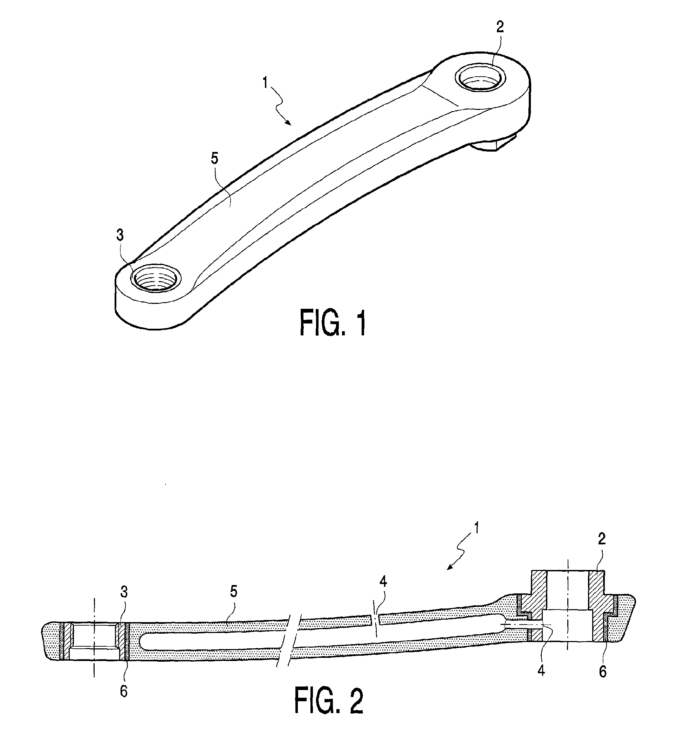

The present invention relates to a hollow bicycle crank made of composite material. As shown figures 1 and 2, the present invention relates preferably to a bicycle crank, comprising a hollow body (1) having a first end and a second end, formed of a composite material (5), and further comprising a bottom bracket axle fitting arrangement (2) fastened at the first end of said body and a pedal mounting arrangement (3) fastened at the second end of said body (1).

Although not illustrated herein said crank is formed such that its cross section is narrower on the pedal mounting section end and thicker on the crank axle section end. Changing the cross sectional area by varying the thickness of the crank in different locations is intended to enhance strength such that the stress to which the crank is subjected is more or less the same everywhere in the cross section. Preferably the cross section on the pedal mounting section end is ranging from 20 to 40 mm, preferably from 20 to 30 mm, and the cross section on the crank axle section end is ranging from 30 to 60 mm, preferably from 44 to 60 mm.

As shown Figure 2, there is at least one passage (4) which is provided between the hollow portion of the crank body (1) and the bottom bracket axle fitting arrangement (2), and/or in the hollow crank body (1). Preferably, the bottom bracket axle fitting arrangement (2) is made of light weight metal, in particular an aluminum alloy of essentially cylindrical configuration which comprises a square receiving arrangement. Preferably, the pedal mounting arrangement (3) is also comprised of a light weight metal, in particular an aluminum alloy of essentially cylindrical configuration which comprises a female thread arrangement. In a preferred embodiment, said arrangements can be encased in an adherence improvement material or a foamable material such as syntactic foam, in order to have an enhance grip of the composite material (5) with said metal arrangements.

According to a preferred embodiment of the invention the crank is essentially made of reinforced carbon fibers which are thermoplastic or thermoset. The specific consequences of the use of thermoplastic or thermoset and their typical advantages are known by the skilled man and will not be further illustrated in the present application.

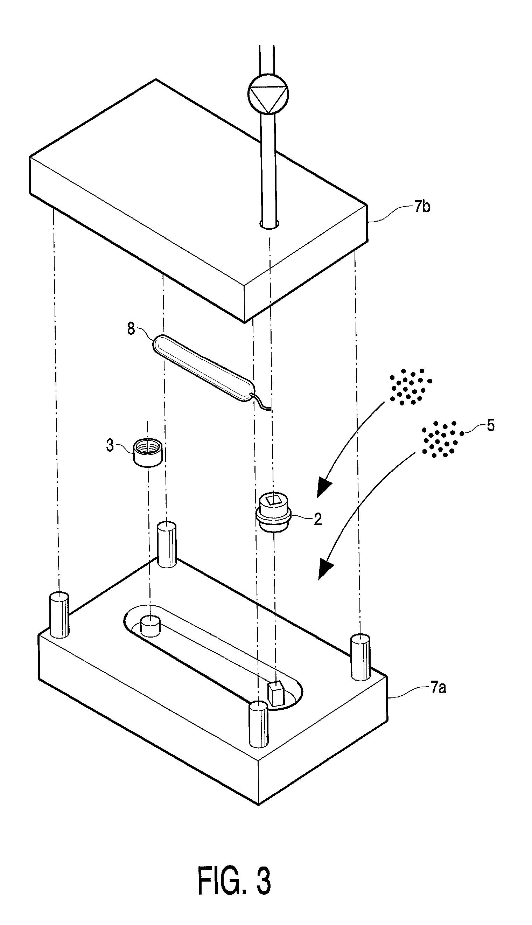

The present invention further relates to a method for manufacturing a bicycle crank according to the invention, wherein preferred molding embodiment is illustrated Figure 3.
In a first step of said method, a bottom bracket axle fitting arrangement (2) and a pedal mounting arrangement (3) are arranged in fixed positions in the bottom half (7a) of a female mold. The positioning of said arrangements is performed according to techniques known in the art. These metal arrangements may be made of any suitable metal material.

The next step in said method consists of applying a composite material (5) within the mold and around the arrangements (2) and (3). Preferably applying a composite material (5) consists herein of inserting preforms of stacked resin impregnated carbon fiber plies into respective halves of the female mold.

The next step consists of positioning at least one inflatable bladder (8) over the composite material in the mold, wherein said bladder is connected to at least one passage (4) protruding at least one of the arrangements (2) or (3) or through the composite material (5). Then the top half of the mold (7b) is mated to the bottom half of the mold (7a) and the assembly is heated, preferably by heating the top (7b) and the bottom half (7a) of the mold, while simultaneously pressurizing the bladder (8), preferably with air pressure applied thereto. The inflated bladder thereby presses the composite material against the mold, and the material is heated to form the final cured crank.

In another embodiment, the bladder (8) is introduced once the top half (7b) of the female mold is positioned upon the bottom half of said mold (7a). The bladder is then forced through the mold and the composite to an initial central position within the hollow body to be formed.

The bladder (8) is preferably pressurized by inserting a pressurized air hose, typically via an passage (4) protruding the bottom bracket axle fitting arrangement (2) and/or the pedal mounting arrangement (3) or through the composite material. Alternatively, the bladder (8) may be heated and pressurized by causing a heated fluid, i.e., hot water, steam, hydraulic oil, low melting point metals, low melting point metal alloys such as lead alloys etc., to flow therethrough. The use of such fluid heating eliminates the need to heat the bottom half (7a) and top half (7b) of the mold. The bladder (8) is pressurized with a fluid, gas or liquid, preferably air, with a suitable pressure source located outside of the mold.

Pressurizing and heating the bladder (8) causes the bladder to expand the polymer material (5) formed thereabout such that it conforms to the shape of the mold. Thus, a hardened composite is formed during the heating process, according to well known principles.

Pressure may be applied to the bladder through the passage to compact uncured composite material while optionally applying vacuum in the mold cavity to remove entrapped air while heating mold to cure the composite material.

The timing of the pressure application, the amount of pressure, and timing and extent of the heating of the mold to curing temperature can be optimized by suitable process controllers to produce the desired results. The composite should be fully expanded by the inflatable bladder (8) to the mold walls to form for example well compacted high-fiber-content, low-void-content laminate. The pressure may be cycled, or pulsed to produce this result.

The bladder pressure can vary between 200 to 250 psig. However, higher and lower pressures may be used to fit design requirements, and the equipment design limitations. The mold is heated to the temperature required to cure the composite material being used.

In order to remove air from the mold that may cause voids in the final part, a vacuum may be applied to the mold cavity via a special port in the mold (not shown herein) before and during the time the bladder is inflated and the mold is heated. A vacuum seal can be obtained by use of an "O"-ring inside "O"-ring groove.

With particular reference to Figure 3, the inflatable bladder (8), is preferably an expandable bladder (8), formed of a temperature resistant, resilient material such as silicone, which can be optionally covered with a polymer impregnated fiber weave. Although not shown herein, more than one bladder may be added to the mold. The bladder (8) can be formed in conventional manner for the material from which it is fabricated. For heat-sealable materials conventional thermoplastic heat sealing techniques are used. For complex shapes and curves, special heat sealing elements may be used. A two-panel bag can be formed from separate sheets or a tube by sealing the edges of the bag using a heated sealing bar. The bladder (8) may be also be formed from other suitable methods, such as molding, dipping and curing around a mandrel, and the like, as long as a suitable bladder with the necessary properties can be formed.

The composite material (5) is preferably a woven fiber material and preferably comprises fiberglass, KEVLAR synthetic fiber, metal fibers, and/or carbon fibers. Preferably, a single, continuous sheet of polymer impregnated fiber weave is utilized so as to optimize the strength of the final bicycle crank.

Optionally a layer of transparent nylon wrapping is formed over the polymer impregnated fiber weave. The nylon wrapping melts during the molding process so as to provide a substantially clear and durable coating which adds depth to the surface finish of the crank and which allows viewing of the weave of the resulting fiber reinforced polymer composite therethrough in an aesthetically desirable manner.

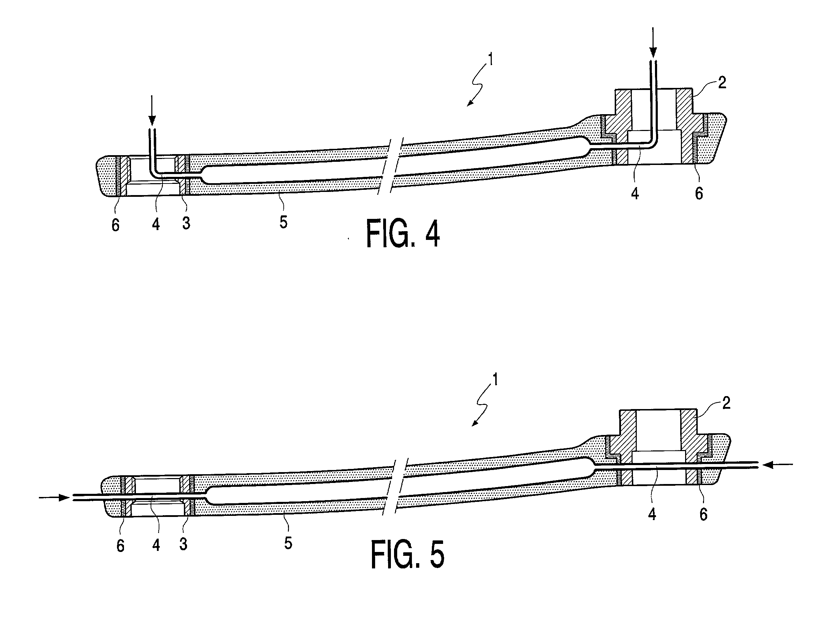

Figures 4 and 5 illustrate alternative embodiments of the present invention. Figure 4 illustrates a composite crank according to the invention wherein the passage (4) protrudes both metal arrangements (2, 3). In this case the pressurized fluid for inflating the bladder can be provided during the molding process along an L shaped tubing.

Another alternative is illustrated Figure 5, wherein the passage (4) is provided along the longitudinal axis of the crank. In this case the pressurized fluid may be provided during the molding process in a straight tubing. Although the passages (4) are illustrated in Figures 4 and 5 as protruding both metal arrangements (2, 3), it is self evident that embodiments wherein only one of the metal arrangements has a passage (4), or wherein other passages (4) are provided in the hollow crank body (1) are encompassed herein.

After the curing of the composite material, the mold may be cooled. Cooling may further be facilitated by causing a cooled fluid, i.e., air or water, to flow through the bladder (8). Conventional water cooling of the bottom half (7a) and top half (7b) of the mold may also be utilized.

After the composite material has cured, the mold is opened, the cured part crank removed, and the bladder fitting extracted from the cured part. The bladder may also be extracted or left in the cured crank. The bladder may be removed from inside the cured crank, by pulling it out of hole through which the inflation fitting extended, or any other suitable hole. When more than one bladder is used, a hollow compartmented crank is obtained.

The bladder can be made of a heat resistant plastic that does not melt or react with or bond to the interior of the molded part. Thus, it can become separated therefrom and easily removed, along with any small residue of the foam core that may be within bladder. In the preferred embodiment of this invention, the bladder consists of a thin film that comprises only a small volume of material. The film bladder can then be removed by pulling it out of even a small opening in the molded part. Additionally the thin film bladder itself can be a soluble plastic, preferably water soluble, such as polyvinyl alcohol (PVA) film. The use of easily soluble bladder films is advantageous where extremely small openings are used for inflation during molding and subsequent removal of the bladder. Soluble films are also used if molding of very complex features on the inside of the part might inhibit removal of the bladder. Such complexities might involve cocured metallic features inside the part.

After removal of the bladder and core, the completed part is trimmed if necessary and optionally provided with a coating.

It will be apparent that the composite bicycle crank produced using the method of the invention can be molded to any desired configuration, and can be used in constructing any configuration of bicycle pedal systems. With the method of the invention a bicycle crank is produced that is made of composite materials, is hollow and can be mass produced, with repeatability, reliability and strength of parts, while achieving a low weight. The cured composite material making up the crank part has no overlapping joints. Furthermore a minimum amount of manual labor is required in the production of said crank.

The thus obtained composite bicycle crank have superior characteristics due to the properties of impregnated carbon fibers, such as being very light, but at the same time very strong and having ends which are able to endure tensile and compressive forces. A crank constructed in the manner of the present invention will have many advantages even when employed in prior art wheel systems. By employing the hollow crank of the present invention in a pedal system provides increased lateral stability, higher overall strength, reduced weight and superior performance.

The present invention further relates to a device made of composite material comprising at least one metal connection pieces, wherein said device is made of one piece using a bladder molding technique whereby at least one bladder is inflated through passage protruding at least one of the connections pieces and/or the composite material.

It is understood that the exemplary crank described herein and shown in the drawings represents only a presently preferred embodiment of the invention. Indeed, various modifications and additions may be made to such embodiment without departing from the spirit and scope of the invention. Further, as those skilled in the art will appreciate, various different composite and/or polymer materials are likewise suitable for use in the practice of the present invention. Thus, these and other modifications and additions may be obvious to those skilled in the art and may be implemented to adapt the present invention for use in a variety of different applications.

## Claims

1. Composite bicycle crank comprising:
a hollow crank body (1) having a first and second end, formed of a composite material (5) retaining two metal arrangements, i.e. a bottom bracket axle fitting arrangement (2) positioned at the first end of said body and a pedal mounting arrangement (3) positioned at the second end of said body.

2. Bicycle crank according to claim 1, wherein at least one passage (4) for a pressurized fluid or gas is provided protruding the hollow crank body (1).

3. Bicycle crank according to claims 1 or 2, wherein at least one passage (4) for a pressurized fluid or gas is provided protruding at least one of the arrangements (2,3).

4. Bicycle crank according to any of claims 1 to 3, wherein said composite material (5) is a carbon based or a metal based matrix material.

5. Bicycle crank according to any of claims 1 to 4, wherein said composite material (5) is a polymer impregnated fiber material.

6. Bicycle crank according to claim 5, wherein said composite material (5) is a thermoplastic impregnated fiber material.

7. Bicycle crank according to claim 5, wherein said composite material (5) a polymer impregnated carbon fiber material.

8. Bicycle crank according to any of claims 5 to 7, wherein said fiber material comprises at least one ply of interwoven fiber material impregnated with a curable resin.

9. Bicycle crank according to any of claims 1 to 8, wherein the external circumference of the arrangements (2,3) is provided with syntactic foam for increasing the adherence with the composite.

10. Bicycle crank according to any of claims 1 to 9, wherein said hollow crank body (1) is partitioned.

11. Method for the manufacture of a composite bicycle crank according to any of claims 1 to 10, comprising the steps of:
a) positioning a bottom bracket axle fitting arrangement (2) and a pedal mounting arrangement (3) in fixed positions in a female mold; and
b) applying composite material (5) within the mold and around the arrangements (2) and (3),
c) providing at least one inflatable bladder (8) in the mold, wherein said bladder is connected to at least one passage (4) protruding at least one of the arrangements (2) or (3) and/or the composite material (5),
d) mating the top half of the female mold (7b) on the bottom half of the female mold;
e) curing the composite material (5); while
f) inflating said bladder (8) so as to cause the composite material (5) to generally conform to the shape of the mold.

12. Method according to claim 11, wherein step (d) is performed before step (c).

13. Method according to claims 11 or 12, wherein around the external circumference of said bottom bracket axle fitting arrangement (2) and pedal mounting arrangement (3) foam (6) is provided enhancing the adherence with the composite material.

14. Method according to any of claims 11 to 13 wherein step (e) comprises heating the bottom half (7a) and the top half (7b) of the female mold.

15. Method according to any of claims 11 to 14, further comprising the step of:
g) cooling the top half (7b) and the bottom half (7a) of the female mold subsequent to inflating said bladder (8).

16. Device made of composite material comprising at least one metal connection pieces, wherein said device is made of one piece using a bladder molding technique whereby at least one bladder is inflated through passage protruding at least one of the connections pieces and/or the composite material.
